## Europäisches Patentamt

## European Patent Office

## Office européen des brevets

(19)

(11) Veröffentlichungsnummer: **0 085 425**
**B1**

(12) **EUROPÄISCHE PATENTSCHRIFT**

(45) Veröffentlichungstag der Patentschrift:
02.11.88

(51) Int. Cl.⁴: **B 03 B 9/00**

(21) Anmeldenummer: 83100891.7

(22) Anmeldetag: 01.02.83

(54) Betonrecyclinganlage.

(30) Priorität: 03.02.82 DE 3203620

(43) Veröffentlichungstag der Anmeldung:
10.08.83 Patentblatt 83/32

(45) Bekanntmachung des Hinweises auf die Patenterteilung:
02.11.88 Patentblatt 88/44

(84) Benannte Vertragsstaaten:
AT

(56) Entgegenhaltungen:
EP-A-0 017 504
DE-A-2 617 837
DE-A-2 647 130
DE-A-2 929 857
DE-U-7 822 787
US-A-3 997 434
US-A-4 154 671

(73) Patentinhaber: Salomon, Dieter, Wickeder Strasse 51, D-5758 Fröndenberg- Warmen (DE)
Patentinhaber: Sundermann, Udo, Heinrichstrasse 85a, D-4619 Bergkamen (DE)

(72) Erfinder: Salomon, Dieter, Wickeder Strasse 51, D-5758 Fröndenberg- Warmen (DE)
Erfinder: Sundermann, Udo, Heinrichstrasse 85a, D-4619 Bergkamen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren und eine Vorrichtung zur Aufbereitung von insbesondere bei Betonbereitungsanlagen anfallenden Restbeton, der zunächst auf einem Schwingsieb o.ä. gewaschen und in Kies und Sand sowie Zement getrennt wird, wobei der ausgewaschene Zement in einem Zwischenlagerbehälter zwischengelagert und dann rezirkuliert wird, indem er über eine Pumpe mit einer Kreislaufrohrleitung über eine Breitdüse im Zwischenlagerbehälter, periodisch in Bewegung ist.

Aus der DE-A-2 647 130 ist eine Vorrichtung zur Aufbereitung von Restbeton bekannt, bei der zunächst eine Auswaschung des Restbetons erfolgt und wobei der ausgewaschene Zementschlamm wahlweise in einen fahrbaren Container abgefüllt oder mittels einer Pumpe in den Betonmischer der Betonbereitungsanlage geleitet wird. Bei dieser bekannten Anlage ist es nachteilig, daß die Aufbereitung des Restbetons nur unvollständig möglich ist. Die Anlage muß, um ein Erstarren des gewonnenen Zementschlamms in der Anlage zu verhindern, ca. alle zwei Stunden, spätestens beim Einsetzen des Abbindeprozesses leergefahren und gereinigt werden. Ein Recycling des Restbetons ist daher nur unvollständig möglich.

Der Erfindung liegt die Aufgabe zugrunde, ein Verfahren und eine Vorrichtung zur Aufbereitung von Restbeton anzugeben, bei denen eine vollständige Weiterverwendung des Restbetons auch bei längerem Stillstandszeiten der Bereitungsanlage möglich ist. Darüberhinaus soll ein Verfahren angegeben werden, das den Wasserverbrauch einer Betonbereitungsanlage vermindert und zu einer optimalen Ausnutzung des Zements und Wassers führt.

Die Aufgabe wird dadurch gelöst, daß der ausgewaschene Zement im Zwischenlagerbehälter nach dem kennzeichnenden Teil des Anspruchs 1 periodisch gesteuert bewegt wird. Durch diese periodisch gesteuerte Bewegung ist es vorteilhaft möglich, den Zement daran zu hindern abzubinden, so daß auch über längere Zwischenräume, z. B. am Wochenende, der aus dem Restbeton gewonnene Zement weiterverarbeitbar bleibt und bei Wiederaufnahme der Produktion sofort eingesetzt werden kann.

In Ausgestaltung der Erfindung ist vorgesehen, daß das Bewegen durch Umpumpen erfolgt. Bei einen Umpumpen ergibt sich vorteilhaft durch eine Scherwirkung an dem Laufrad der verwendeten Kreiselpumpe ein gründliches Trennen der einzelnen Zementteilchen voneinander. Die Trennung ist tiefgreifend, so daß auch bei längeren Intervallen zwischen dem Umpumpen keine Zusammenballung der Zementteilchen mit der Folge des Abbindens erfolgt.

In weiterer Ausgestaltung der Erfindung ist vorgesehen, daß der ausgewaschene Zement in Brauchwasser und Zementschlamm getrennt wird. So ergibt sich vorteilhaft, daß der Frischwasserbedarf der Betonbereitungsanlage gesenkt werden kann. Des weiteren ist es so möglich, das Auswaschen des Restbetons mit einer relativ großen Wassermenge besonders gründlich durchzuführen.

In weiterer Ausgestaltung der Erfindung ist vorgesehen, daß die Trennung von Zementschlamm und Brauchwasser durch einen Absetz- und/oder Filtervorgang erfolgt. Durch einen Absetzvorgang ergibt sich eine besonders einfache Möglichkeit, Brauchwasser zu gewinnen. Insbesondere in Verbindung mit einem Filter, z. B. einem Bandfilter, ergibt sich eine Wasserqualität für das Brauchwasser, die für den Betrieb einer Beton-Bereitungsanlage vollkommen ausreichend ist.

In Ausgestaltung der Erfindung ist dabei vorgesehen, daß das Brauchwasser zum Waschen des Restbetons und/oder zum Spülen von Betontransportfahrzeugen und/oder im Bereitungsprozeß verwendet wird. So ist je nach Bedarf eine optimale Verwendung des gewonnenen Brauchwassers möglich. Das Waschen des Restbetons erfolgt vorteilhafterweise über Breitflachdüsen mit einem Wasserstrom gegen die Materialaufrichtung in kürzest möglicher Zeit.

In weiterer Ausgestaltung der Erfindung ist vorgesehen, daß das Brauchwasser in einem Brauchwasserkreislauf umläuft. So ergibt sich vorteilhaft, daß der Waschprozeß des Restbetons kostengünstig ohne Frischwasserverbrauch stattfinden kann.

In weiterer Ausgestaltung der Erfindung ist vorgesehen, daß der Brauchwasser-Kreislauf und die Aufbereitung des Restbetons und die Rezirkulation automatisch gesteuert abläuft. So ist eine besonders günstige Restbetonaufbereitung möglich, die insbesondere weitgehend unabhängig von Bedienungspersonal ablaufen kann.

Zur Durchführung des Verfahrens ist eine Restbetonaufbereitungsanlage vorgesehen, bei der anfallender Restbeton auf einem Schwingsieb o.ä. gewaschen und in Kies und Sand sowie Zement getrennt wird, wobei der ausgewaschene Zement in einem Zwischenlagerbehälter zwischengelagert und durch eine Pumpe mit einer Kreislaufrohrleitung über eine Breitdüse im Zwischenlagerbehälter, periodisch in Bewegung ist. So ist die Zwischenlagerung und Wiederverwendung des gewonnenen Zements erfindungsgemäß auch bei längeren Stillstandszeiten der Bereitungsanlage möglich.

Durch die Ausgestaltung der erfindungsgemäßen Anlage mit einer Pumpvorrichtung und der anschließenden Kreislaufrohrleitung die in einer Breitdüse endet, durch welche intervallmäßig (periodisch) das Zementschlammwasser gepummt wird, erfolgt eine gute Verteilung des Zementschlammes im Zwischenlagerbehälter. Die gute Verteilung durch die Breitdüse führt zu einem verzögerten Absetzen des Zementschlammes auf den Boden des Zwischenlagerbehälters. So ist es möglich, vorteilhaft die Umpump-Phasen klein zu halten.

In weiter Ausgestaltung der Erfindung ist vorgesehen, daß die Kreislaufrohrleitung aus Kunststoff, vorzugsweise aus PVC besteht. Auf Kunststoff ist ein Ablagern von Zementschlamm nur schlecht möglich und es ergibt sich so eine Anlage, die ohne zu Verstopfungen zu neigen, lange Zeit benutzt werden kann. Des weiteren bietet Kunststoff den Vorteil, daß die Rohrleitung durchsichtig ist, so daß eventuelle Ablagerungen erkannt werden können.

In weiterer Ausgestaltung der Erfindung ist vorgesehen, daß der Zwischenlagerbehälter als Absetzer ausgebildet ist und einen Brauchwasserüberlauf aufweist. So ergibt sich eine besonders einfache Möglichkeit zur Erzeugung von Brauchwasser, wobei vorteilhafterweise der Brauchwasserüberlauf mit einem Filter, insbesondere in Bandform, versehen werden kann. Das Brauchwasser enthält zwar nach dem Absetzvorgang noch gewisse Schwebebestandteile, diese sind jedoch so fein, daß sie in der Restbeton-Waschvorrichtung nicht stören, ebenso bei einer Weiterverwendung des Brauchwassers zum Reinigen der Transportfahrzeuge etc. Durch eine Filterung z. B. eine Bandfilter mit motorischen Antrieb und einer Abstreifvorrichtung in den Zwischenlagerbehälter kann die Brauchwasserqualität bei Bedarf einfach noch weiter gesteigert werden.

In weiterer Ausgestaltung der Erfindung ist vorgesehen, daß die Anlage einen Brauchwasserbehälter mit einer Brauchwasserpumpe aufweist, die über eine Kreislaufleitung mit der Wasch- und Siebvorrichtung und Leitungen mit einem Betontransport-Fahrzeug-Befüllungsgalgen verbunden ist. So ist eine bisher unerreicht gute Brauchwassernutzung, die zu einer erheblichen Verminderung des Wasserbedarfs einer Betonbereitungsanlage führt, möglich.

In weiterer Ausgestaltung der Erfindung ist vorgesehen, daß die Anlage automatisch gesteuerte Ventile aufweist, die mit Füllstandsmeßgeräten, Dosierwaagen etc. in Verbindung stehen. So ist ein zumindest teilautomatischer Betrieb der erfindungsgemäßen Restbeton-Aufbereitungsanlage möglich. Bedienungsfehler durch angelernte Kräfte o.ä. sind unmöglich und es wird stets eine gleichbleibende Brauchwasser- und Betonqualität erreicht.

In abweichender Ausgestaltung der Erfindung ist auch vorgesehen, daß der Zwischenlagerbehälter for den ausgewaschenen Zement und der Brauchwasserbehälter rund ausgebildet sind und Einrichtungen, insbesondere Kreiselpumpen und Rührer zur Erzeugung einer Zirkulationsbewegung aufweisen. Durch diese Ausgestaltung ergibt sich eine besonders günstige Form des Zwischenlagerbehälters und des Brauchwasserbehälters, da in den Wänden der einzelnen Behälter keine Beulspannungen auftreten. Des weiteren ist es möglich, innerhalb der Behälter eine bessere Zirkulation zu erreichen als in containerartigen, eckigen Behältern. Die Zirkulation kann dabei in vorteilhafter Weise auch durch einen zentralen Rührer erzeugt werden, der ein Teil der Funktion der Kreiselpumpe mit übernimmt.

Die Anlage kann stationär oder beweglich ausgebildet sein. Sie besteht vorteilhaft aus Containern mit Standardmaßen, so daß ein einfacher Transport auf und mit Container-Transportvorrichtungen möglich ist.

Die Erfindung wird anhand von Zeichnungen näher erläutert, die ein besonders bevorzugtes Ausführungsbeispiel zeigen und aus denen weitere vorteilhafte Einzelheiten entnehmbar sind.

Die Zeichnungen zeigen im einzelnen:

Fig. 1    einen Zwischenlager- und Brauchwasserbehälter in schematischer Darstellung in Seitenansicht

Fig. 2    einen Zwischenlager- und Brauchwasserbehälter in schematischer Darstellung in Draufsicht und

Fig. 3    eine Restbetonaufbereitungsanlage mit runden Behältern.

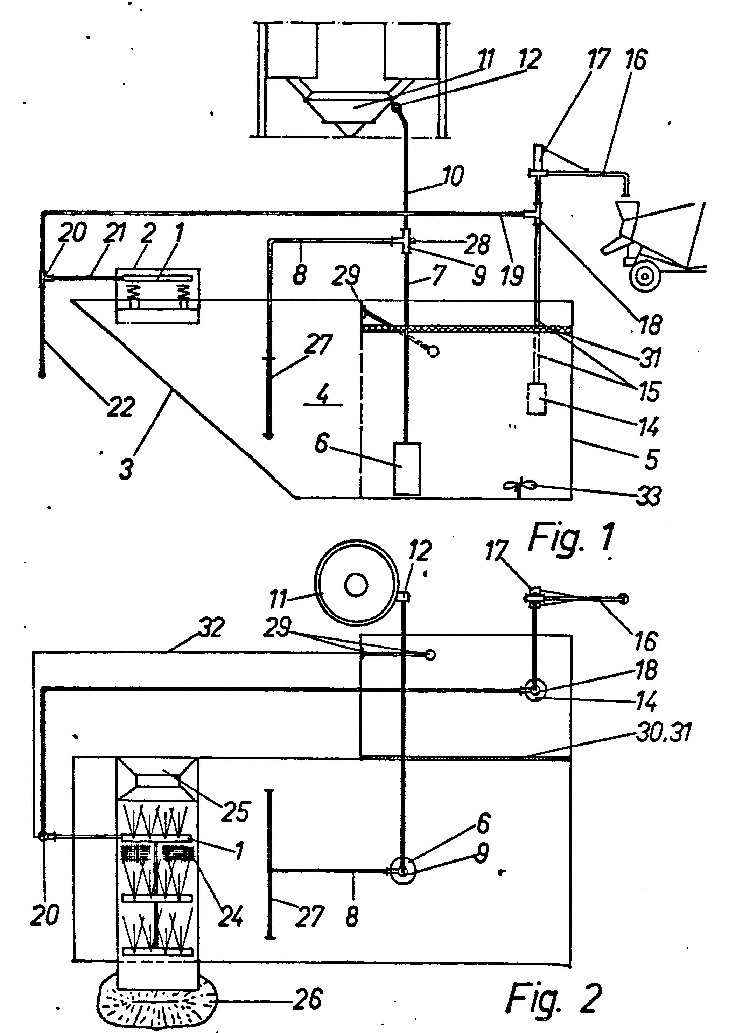

In Fig. 1 bezeichnet 1 die Waschvorrichtungsdüsen, die in der als Schwingsieb ausgebildeten Waschvorrichtung 2 angeordnet sind. Bei den Düsen 1 ist es von besonderem Vorteil, wenn sie im Gegenstrom zu den in die Aufgabevorrichtung 25 eingegebenen Restbetonstrom arbeiten, der die Schwingvorrichtung 2 von der Aufgabevorrichtung 25 zu der Abwurfseite mit dem ausgewaschenen Sand und Kies 26 durchläuft. Der in der Vorrichtung 2 abgeschiedene Zementschlamm gelangt über die Rutsche 3 in den Zwischenlagerbehälter 4, wo in Stillstandzeiten der Bereitungsanlage durch die Pumpe 6 und die Rohrleitung 7, 8 sowie die Breitschlitzdüse 27 das erfindungsgemäße Umpumpen der Zement-Wassermischung erfolgt.

Zur Verhinderung des Absetzens von Zementschlamm in von dem umgepumpten Wasserstrom nicht erfaßten Ecken dient eine beispielhaft gezeigte Rührvorrichtung 33, die ebenso als Paddelrührer mit quer durch den Behälter 4 verlaufender Welle ausgebildet sein kann. Neben dem Zwischenlagerbehälter 4 befindet sich der Brauchwasserbehälter 5 mit der Brauchwasserpumpe 14. Diese ist mit dem Transportfahrzeuge-Wasch-Galgen 16, 17 und über die Leitung 19, 21 und das Ventil 20 mit der Waschvorrichtung 2 verbunden. Der Mischer 1 wird in üblicher Weise gespült gleichzeitig auch die Leitung 10. So kann auch bei längeren Stillstandszeiten kein Abbinden des Zementschlamms in dieser Leitung erfolgen.

Der Behälter 4 weist einen Überlauf 31 auf, der an seiner Oberseite mit einem Filter 30 versehen sein kann und den Brauchwasserbehälter 5 gegenüber dem Zwischenlagerbehälter 4 abtrennt.

Der Zuführung von Frischwasser dient die Leitung 22, die in den Dreiwegehahn 20 in die Leitung 21 zum Waschen des Restbetons mündet. Den Wasserspiegel des Braucwasserbehälters 5 reguliert die Steuereinheit 29 mit einem Schwimmer, über den eine Frischwasserzugabe eingeschaltet wird, wenn der Brauchwasserspiegel zu tief sinkt.

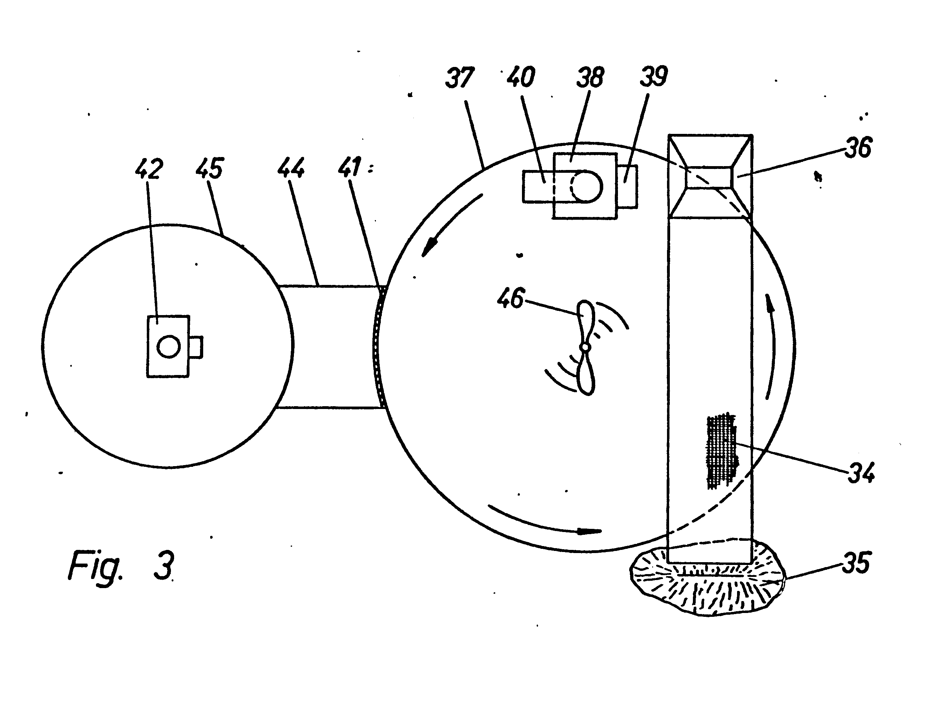

In Fig. 3 ist eine Restbetonaufbereitungsanlage dargestellt, die mit einer mit besonders kleinen Wandstärken versehenen Behälteranlage arbeiten kann. Der aufzubereitende Restbeton wird der Vorrichtung 36 aufgegeben und auf dem Sieb 34 abgesiebt und abgebraust. Der ausgewaschene Zement gelangt in den Behälter 37 und der Kies und Sand zur Stelle 35. Zur Zirkulation innerhalb des Behälters 37 dient die Kreiselpumpe 38 mit dem Druckstutzen 40 und dem Ansaugstutzen 39. Es kann aber auch eine schlanke Tauchpumpe verwendet werden.

Zusammen mit dem Rührer 46 erzeugt die Kreiselpumpe 38 eine Zirkulation, die zu einem zuverlässigem Bewegen des in dem Behälter 37 gesammelten Zementschlamms auch bei längeren Stillstandszeiten führt. Aus dem Behälter 37 fließt gereinigtes Brauchwasser durch eine Filterwand 41 über die Überleitungsvorrichtung 44 in den Brauchwasserbehälter 45, in den eine Brauchwasserpumpe 42 angeordnet ist, die das Brauchwasser entsprechend dem Schema in Fig. 1 und Fig. 2 zu der Waschvorrichtung und zu den Transportfahrzeugen fördert.

Die erfindungsgemäße Anlage ist speziell für die Wiederaufbereitung von Transportbeton gedacht. Sie kann jedoch, ohne den Rahmen der Erfindung zu verlassen, ebenso vorteilhaft für alle Betonbereitungsanlagen eingesetzt werden. Allen Anwendungsfällen gemeinsam ist die vollständige Ausnutzung des Restbetons auch bei längeren Stillstandszeiten, wie Wochenenden, Feiertagen etc.. Der Restbeton kann stets vollständig weiter verwendet werden.

## Patentansprüche

1. Verfahren zur Aufbereitung von insbesondere bei Betonaufbereitungsanlagen anfallendem Restbeton auf einem Schwingsieb o.ä. gewaschen und in Kies und Sand sowie Zement getrennt wird, wobei der ausgewaschene Zement in einem Zwischenlagerbehälter (4, 37) zwischengelagert und dann rezirkuliert wird, dadurch gekennzeichnet, daß der ausgewaschene Zement durch eine Pumpe (6, 38) mit einer Kreislaufrohrleitung (7, 8) über eine Breitdüse (27) im Zwischenlagerbehälter (4, 37), periodisch in Bewegung ist.

2. Verfahren nach Anspruch 1, dadurch gekennzeichnet, daß der ausgewaschene Zement in Brauchwasser und Zementschlamm getrennt wird.

3. Verfahren nach Anspruch 2, dadurch gekennzeichnet, daß die Trennung von Zementschlamm und Brauchwasser durch einen Absetz- und/oder Filtervorgang erfolgt.

4. Verfahren nach Anspruch 2 oder 3, dadurch gekennzeichnet, daß das Brauchwasser zum Waschen des Restbetons und/oder zum Spülen von Betontransportfahrzeugen und/oder im Bereitungsprozeß verwendet wird.

5. Verfahren nach Anspruch 2, 3 oder 4, dadurch gekennzeichnet, daß das Brauchwasser in einem Brauchwasserkreislauf umläuft.

6. Verfahren nach Anspruch 5, dadurch gekennzeichnet, daß der Brauchwasser-Kreislauf und die Aufbereitung des Restbetons und die Rezirkulation automatisch gesteuert abläuft.

7. Anlage zur Durchführung des Verfahrens nach einem der vorhergehenden Ansprüche, mit einer Restbeton-Wasch- und Absiebvorrichtung und einem Zwischenlagerbehälter für den ausgewaschenen Zement dadurch gekennzeichnet, daß sie eine Pumpvorrichtung (6, 38), vorzugsweise eine Kreiselpumpe mit Kreislaufrohrleitung, die in eine Breitdüse (27) endet, in dem Zwischenlagerbehälter (4, 37) zur periodischen Bewegung des ausgewaschenen Zements aufweist.

## Claims

1. Method of processing residual concrete, in particular with concrete processing units, which is first washed on a vibrating sieve or similar equipment and separated into sand and cement, the washed cement being stored in an intermediate vessel (4, 37) and then re-circulated characterized by the fact that the washed cement is kept in motion periodically by a pump (6, 98) with a circulation circuit piping (7, 8) via a wide jet (27) in the intermediate vessel (4, 37).

2. Method according to application 1 characterized by the fact that the washed cement is separated into industrial water and cement mud.

3. Method according to application 2 characterized by the fact that the separation of cement mud and industrial water is carried out by means of a depositing and or filtering operation.

4. Method according to application 2 or 3 characterized by the fact that the industrial water is used to wash the residual concrete and/or to rinse concrete transport vehicles and/or in the course of processing.

5. Method according to application 2, 3 or 4 characterized by the fact that the industrial water circulates in an industrial water circulation.

6. Method according to application 5 characterized by the fact that the industrial water circulation, the processing of the residual concrete and the recirculation are automatically controlled.

7. Unit for carrying out the method according to one of the above applications with a residual concrete washing and sieving device and an intermediate vessel for the washed cement characterized by the fact that it has a pump device (6, 38), preferably a centrifugal pump with circulation circuit piping, which ends in a wide jet (27) in the intermediate vessel (4, 37) for the periodical stirring of the washed cement.

## Revendications

1. Procédé de retraitement de béton résiduel en particulier de celui occasionné dans les installations de préparation du béton, qui est tout d'abord lavé et scindé en gravier, sable et ciment sur un tamis vibrant ou autre système de séparation; dans ce procédé, le ciment lavé est provisoirement stocké dans une cuve intermédiaire (4, 37) et recirculé ensuite par mouvement périodique, caractérisé par un entraînement par une pompe (6, 38) avec conduite circulaire (2, 8) et à travers un buse large (27) dans la cuve intermédiaire (4, 37).

2. Procédé selon la demande No. 1, caractérisé par la scission du ciment lavé en eau industrielle et coulis de ciment.

3. Procédé selon la demande No. 2, caractérisé par la scission du ciment lavé en eau industrielle et coulis de ciment à l'aide d'un procéssus de décantation et/ou de filtrage.

4. Procédé selon la demande No. 2 ou 3, caractérisé par l'utilisation de l'eau industrielle pour le lavage du béton résiduel et/ou pour le rinçage de véhicules de transport de béton et/ou lors du processus de préparation du béton.

5. Procédé selon la demande No. 2, 3 ou 4, caractérisé par la circulation de l'eau industrielle en circuit fermé.

6. Procédé selon la demande No. 5, caractérisé par la commande automatique du circuit d'eau industrielle, du retraitement de béton résiduel et de la recirculation.

7. Installation d'exécution du procédé selon l'une des demandes précitées, avec un dispositif de lavage et de filtrage du béton résiduel et une cuve de stockage intermédiaire pour le ciment lavé, caractérisé par la présence dans la cuve de stockage intermédiaire (4, 37) d'un dispositif de pompage (6, 38) pour agiter périodiquement le ciment lavé; de préférence une pompe centrifuge avec conduite circulaire qui aboutit à une large buse (27).

0 085 425

Fig. 1

Fig. 2

1

Fig. 3